# EUROPEAN PATENT SPECIFICATION

(11) **EP 3 145 161 B1**
(45) Date of publication and mention of the grant of the patent: **07.11.2018**
(21) Application number: 14898507.0
(22) Date of filing: 27.06.2014
(51) Int. Cl.: H04L 29/12, H04L 12/24

(54) **AUTOMATIC WIRELESS ACCESS NETWORK CONFIGURATION SYNCHRONIZATION METHOD AND APPARATUS**
VERFAHREN UND VORRICHTUNG ZUR KONFIGURATIONSSYNCHRONISIERUNG EINES AUTOMATISCHEN DRAHTLOSZUGRIFFSNETZWERKS
PROCÉDÉ ET APPAREIL DE SYNCHRONISATION AUTOMATIQUE DE CONFIGURATION DE RÉSEAU D'ACCÈS SANS FIL

(43) Date of publication of application: 22.03.2017
(73) Proprietor: Huawei Technologies Co., Ltd., Longgang District Shenzhen, Guangdong 518129 (CN)
(72) Inventor: LI, Jin, Shenzhen Guangdong 518129 (CN); LIANG, Jian, Shenzhen Guangdong 518129 (CN); CHEN, Yong, Shenzhen Guangdong 518129 (CN); WANG, Jinwu, Shenzhen Guangdong 518129 (CN); FENG, Dayang, Shenzhen Guangdong 518129 (CN)
(74) Representative: Epping - Hermann - Fischer
(86) International application number: PCT/CN2014/081039
(87) International publication number: WO 2016/015180

(56) References cited:
- CN-A- 102 143 506
- CN-A- 102 204 391
- CN-A- 103 476 023
- CN-A- 103 517 374
- CN-A- 104 335 554
- US-A1- 2008 109 539
- US-A1- 2010 111 055
- US-A1- 2012 054 338
- KRZYSZTOF GROCHLA (PROXIMETRY): "IEEE 802.11 parameters DHCP Option; draft-ietf-dhc-80211-option-00.txt", IEEE 802.11 PARAMETERS DHCP OPTION; DRAFT-IETF-DHC-80211-OPTION-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 August 2010 (2010-08-26), pages 1-5, XP015070740, [retrieved on 2010-08-26]
- DROMS R: "RFC 1541, Request For Comments, Dynamic Host Configuration Protocol", 1 October 1993 (1993-10-01), IETF REQUEST FOR COMMENTS, XX, XX, PAGE(S) 1 - 39, XP002164347, * page 15 - page 16; figure 3 *
- ZAHID, K.K.A. ET AL.: "IP Network for Emergency Service", MUM 2004, 27 October 2004 (2004-10-27), - 29 October 2004 (2004-10-29), pages 165-169, XP040016225, College Park, Maryland
- BHANDARI S GUNDAVELLI CISCO SYSTEMS J KORHONEN RENESAS MOBILE M GRAYSON CISCO SYSTEMS S: "Access-Network-Identifier Option in DHCP; draft-ietf-dhc-access-network-identifier-0 2.txt", ACCESS-NETWORK-IDENTIFIER OPTION IN DHCP; DRAFT-IETF-DHC-ACCESS-NETWORK-IDENTIFIER-0 2.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 14 February 2014 (2014-02-14), pages 1-18, XP015096978, [retrieved on 2014-02-14]

## Description

### TECHNICAL FIELD

The present invention relates to the wireless access network field, and in particular, to a method and an apparatus for automatically synchronizing wireless access network configuration, and to a Dynamic Host Configuration Protocol DHCP server and client.

### BACKGROUND

In many families and enterprises, only one interface is connected to the Internet. Therefore, to enable all terminals to access the Internet, Wi-Fi (Wireless Fidelity) may be used to provide coverage for a family or an office area. However, because of obstacles such as a wall and a floor in an indoor environment, complete coverage cannot be implemented by relying on only one router (may be referred to as an ingress router) connected to an ingress of the Internet. Therefore, various network repeaters used to extend a Wi-Fi coverage area have emerged.

When a network repeater is used to extend a Wi-Fi coverage area, a user wants to use a same Wi-Fi configuration manner in a home or an office area, for example, to use a same WLAN SSID (Wireless Local Area Networks Service Set Identifier, wireless local area networks service set identifier) and an access manner (includes a security mode, a key, and the like). In this way, provided that a terminal device is in a range of the ingress router and a network repeater corresponding to the ingress router, the terminal device may directly switch and does not need to change configuration of the terminal device, that is, Wi-Fi sharing is implemented.

To implement synchronization of Wi-Fi configuration from the ingress router to the network repeater, currently most users use a manual configuration manner, that is, separately perform manual configuration on each network repeater. Because the manual configuration is inefficient and error-prone, an automatic configuration manner have also emerged in the prior art, for example, configuration information is carried by using UPnP (Universal Plug and Play, Universal Plug and Play) in a P1905.1 protocol. The P1905.1 protocol proposes that device discovery and Wi-Fi configuration synchronization should be performed at a data link layer, and specifically, exchanging of Wi-Fi configuration information should be implemented by exchanging, during registration, configuration information carried by the UPnP.

Though a problem brought by the manual configuration may be resolved by implementing the Wi-Fi configuration synchronization on the basis of the configuration information carried by the UPnP in the P1905.1 protocol, this technology requires all devices, including the ingress router and the network repeater, to support a P1905.1 link. However, because the P1905.1 protocol belongs to a relatively bottom-layer protocol, to enable all devices to support the P1905.1 link requires a complex configuration process, or it cannot be implemented that all devices support the P1905.1 link. Therefore, the automatic configuration manner for the Wi-Fi configuration synchronization in the prior art does not has commonality.

US 20120054338 A1 discloses an assistance device which may provide a user with an identifier of an access point which is to be set in a wireless device. The assistance device may extract, from network information related to a network and stored in the assistance device, an IP address of an assignment server which had assigned an IP address to the assistance device. The assistance device may obtain from the access point, by utilizing the extracted IP address of the assignment server, information including, the identifier of the access point, so as to display the information including the identifier of the access point on a display unit.

KRZYSZTOF GROCHLA (PROXIMETRY), "IEEE 802.11 parameters DHCP Option; draft-ietf-dhc-80211-option-00.txt", IEEE 802.11, discloses a communication between a DHCP client and a DHCP server.

### SUMMARY

Claims 1, 5, 9 and 11 provide a method and an apparatus for automatically synchronizing wireless access network configuration, which can improve commonality of automatic synchronization of network configuration.

To achieve the foregoing purpose, the following technical solutions are used in the embodiments of the present invention:
According to a first aspect, a method for automatically synchronizing wireless access network configuration is provided, including:
receiving, by a Dynamic Host Configuration Protocol DHCP server, a DHCP discover message sent by a DHCP client, wherein the DHCP server is a wireless access device connected to an ingress of an external network and the DHCP client is another wireless access device connected to the DHCP server;
sending, by the DHCP server, a DHCP offer message to the DHCP client; and
receiving, by the DHCP server, a DHCP request message sent by the DHCP client, acquiring configuration information that is corresponding to an SSID, wherein the configuration information and the SSID are configured by the DHCP server, and sending the configuration information corresponding to the SSID to the DHCP client, so as to enable the DHCP client to perform configuration of a wireless access network according to the configuration information.

With reference to the first aspect, in a first possible implementation manner of the first aspect, the sending the configuration information corresponding to the SSID to the DHCP client includes:
encapsulating, by using an extensible markup language XML format, the configuration information corresponding to the SSID;
carrying the configuration information in the XML format by using a reserved option OPTION in a DHCP response message; and
sending, by using the DHCP response message, the configuration information in the XML format to the DHCP client.

With reference to the first aspect or the first possible implementation manner of the first aspect, in a second possible implementation manner of the first aspect, the DHCP discover message carries the first verification information, or the DHCP request message carries first verification information, or both the DHCP discover message and the DHCP request message carry first verification information;
the sending, by the DHCP server, a DHCP offer message to the DHCP client includes:
when it is determined that the first verification information in the DHCP discover message is the same as second verification information stored by the DHCP server, sending, by the DHCP server, the DHCP offer message to the DHCP client; and
the acquiring configuration information that is corresponding to the SSID and configured by the DHCP server includes:
when it is determined that the first verification information in the DHCP request message is the same as the second verification information stored by the DHCP server, acquiring the configuration information that is corresponding to the SSID and configured by the DHCP server.

With reference to the first aspect or the first or the second possible manner of the first aspect, in a third possible implementation manner of the first aspect, after the sending the configuration information corresponding to the SSID to the DHCP client, the method further includes:
monitoring, by the DHCP server, whether the configuration information stored by the DHCP server has changed; and
when the configuration information stored by the DHCP server has changed, acquiring the changed configuration information, and sending the changed configuration information to the DHCP client, so as to enable the DHCP client to re-perform configuration according to the changed configuration information.

According to a second aspect, an apparatus for automatically synchronizing wireless access network configuration is provided, including:
a receiving unit, configured to receive a DHCP discover message sent by a Dynamic Host Configuration Protocol DHCP client, wherein the apparatus is used as DHCP server and is a wireless access device connected to an ingress of an external network and the DHCP client is another wireless access device connected to the DHCP server;
a sending unit, configured to send a DHCP offer message to the DHCP client; where
the receiving unit is further configured to receive a DHCP request message sent by the DHCP client; and
a configuration information acquiring unit, configured to acquire configuration information that is corresponding to an SSID, wherein the configuration information and the SSID are configured by the apparatus; where
the sending unit is further configured to send the configuration information that is acquired by the configuration information acquiring unit and corresponding to the SSID to the DHCP client, so as to enable the DHCP client to perform configuration of a wireless access network according to the configuration information.

With reference to the second aspect, in a first possible implementation manner of the second aspect, the sending unit specifically includes:
an XML encapsulation module, configured to encapsulate, by using an extensible markup language XML format, the configuration information that is acquired by the configuration information acquiring unit and corresponding to the SSID;
a configuration information carrying module, configured to carry the configuration information in the XML format by using a reserved option OPTION in a DHCP response message; and
a sending module, configured to send, by using the DHCP response message, the configuration information in the XML format to the DHCP client.
With reference to the second aspect or the first possible implementation manner of the second aspect, in a second possible implementation manner of the second aspect,
the DHCP discover message carries first verification information, or the DHCP request message carries first verification information, or both the DHCP discover message and the DHCP request message carry first verification information;
the sending unit is specifically configured to:
   when it is determined that the first verification information in the DHCP discover message is the same as second verification information stored by the apparatus, send the DHCP offer message to the DHCP client; and
   the configuration information acquiring unit is specifically configured to:
when it is determined that the first verification information in the DHCP request message is the same as the second verification information stored by the apparatus, acquire the configuration information that is corresponding to the SSID and configured by the apparatus.

With reference to the second aspect or the first or the second possible manner of the second aspect, in a third possible implementation manner of the second aspect, the configuration information acquiring unit is further configured to:
monitor whether the configuration information stored by the apparatus has changed, and
when the configuration information stored by the apparatus has changed, re-acquire the changed configuration information; and
the sending unit is further configured to send the changed configuration information to the DHCP client, so as to enable the DHCP client to re-perform configuration according to the changed configuration information.

According to a third aspect, a method for automatically synchronizing wireless access network configuration is provided, including:
sending, by a Dynamic Host Configuration Protocol DHCP client, a DHCP discover message to a DHCP server, wherein the DHCP server is a wireless access device connected to an ingress of an external network and the DHCP client is another wireless access device connected to the DHCP server;
receiving, by the DHCP client, a DHCP offer message sent by the DHCP server;
sending, by the DHCP client, a DHCP request message, so as to enable the DHCP server that receives the DHCP request message to acquire configuration information that is corresponding to an SSID, wherein the configuration information and the SSID are configured by the DHCP server; and
receiving, by the DHCP client, the configuration information that is sent by the DHCP server and corresponding to the SSID, and performing configuration of a wireless access network according to the configuration information.

With reference to the third aspect, in a first possible implementation manner of the fourth aspect,
the DHCP discover message carries first verification information, or the DHCP request message carries first verification information, or both the DHCP discover message and the DHCP request message carry first verification information.

According to a fourth aspect, an apparatus for automatically synchronizing wireless access network configuration is provided, wherein the apparatus is a wireless access device and a DHCP client connected to a DHCP server and the DHCP server is another wireless access device connected to an ingress of an external network, including:
a sending unit, configured to send a DHCP discover message;
a receiving unit, configured to receive a DHCP offer message sent by a DHCP server; where
the sending unit is further configured to send a DHCP request message, so as to enable the DHCP server that receives the DHCP request message to acquire configuration information that is corresponding to an SSID, wherein the configuration information and the SSID are configured by the DHCP server; and
the receiving unit is further configured to receive the configuration information that is sent by the DHCP server and corresponding to the SSID; and a configuration unit, configured to perform configuration of a wireless access network according to the configuration information received by the receiving unit.

According to the method and apparatus for automatically synchronizing wireless access network configuration, a DHCP client sends a DHCP discover message to a DHCP server; after receiving the DHCP discover message, the DHCP server determines a to-be-allocated SSID; when receiving a DHCP request message sent by the DHCP client, the DHCP server acquires configuration information corresponding to the to-be-allocated SSID, and sends the configuration information to the DHCP client, so as to enable the DHCP client to perform configuration on the DHCP client according to the received configuration information, and therefore implement automatic configuration synchronization between the DHCP client and the DHCP server. That is, wireless access network configuration is synchronized to and carried in exchanged DHCP information in a manner of extending the DHCP process, and therefore automatic synchronization of network configuration is implemented. Because all devices that support the DHCP protocol may be extended to support synchronization of wireless access network configuration, compared with the prior art in which a complex configuration process needs to be performed to enable all devices to support a P1905.1 link, solutions provided in the embodiments of the present invention can improve commonality of automatic synchronization of network configuration.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for automatically synchronizing wireless access network configuration according to Embodiment 1 of the present invention;
FIG. 2 is a flowchart of a method for automatically synchronizing wireless access network configuration according to Embodiment 2 of the present invention;
FIG. 3 is a signaling flowchart of a method for automatically synchronizing wireless access network configuration according to Embodiment 3 of the present invention;
FIG. 4 is a schematic structural diagram of an apparatus for automatically synchronizing wireless access network configuration according to Embodiment 4 of the present invention;
FIG. 5 is a schematic structural diagram of a DHCP server according to Embodiment 5 of the present invention;
FIG. 6 is a schematic structural diagram of an apparatus for automatically synchronizing wireless access network configuration according to Embodiment 6 of the present invention; and
FIG. 7 is a schematic structural diagram of a DHCP client according to Embodiment 7 of the present invention.

### DESCRIPTION OF EMBODIMENTS

In scenarios such as a family and an enterprise that have relatively large space and cannot be fully covered by a single router, a user may use a network repeater to implement coverage of the entire space. In a case in which a terminal device accesses a wireless access network such as Wi-Fi, WiMax (Worldwide Interoperability for Microwave Access, Worldwide Interoperability for Microwave Access) by using wireless access device such as an access point, a router, a network repeater, and the like. To implement network sharing, all wireless access devices need to use a same network configuration manner.

The present invention is proposed for resolving a problem that an existing automatic configuration manner for network configuration synchronization does not has commonality, and is based on the Dynamic Host Configuration Protocol (Dynamic Host Configuration Protocol, DHCP). The DHCP is a network protocol for a local area network and works on the basis of the User Datagram Protocol (User Datagram Protocol, UDP). The DHCP is based on a client/server (Client/Server, C/S) working mode. A DHCP server may provide an address and a configuration parameter for a host (that is, a DHCP client) on the Internet.

The following clearly and completely describes the technical solutions in the embodiments of the present invention with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

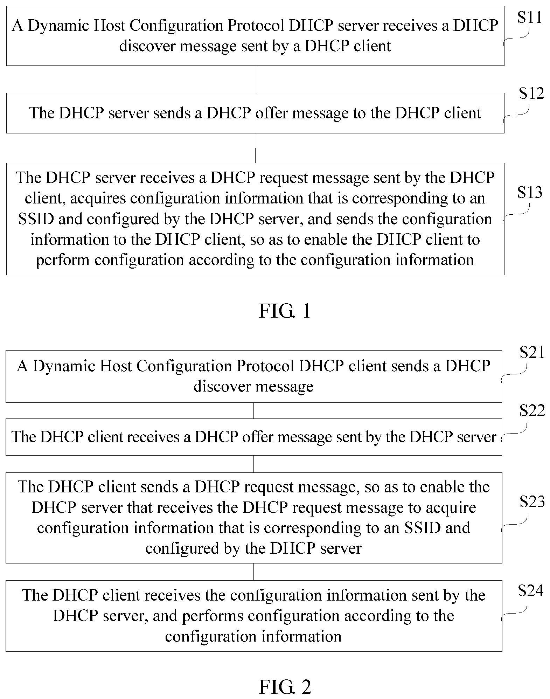

FIG. 1 is a flowchart of a method for automatically synchronizing wireless access network configuration according to Embodiment 1 of the present invention. This method may be implemented by an apparatus used as a DHCP server. The apparatus has a control processing function, supports the DHCP protocol, and can communicate with a DHCP client. For example, the apparatus may be a wireless access device connected to an ingress of an external network. In the case of multiple wireless access devices, in addition to the wireless access device connected to the ingress of the external network, there is also another wireless access device that is connected to the wireless access device connected to the ingress of the external network. Corresponding to the DHCP server, in addition to the wireless access device connected to the ingress of the external network, another wireless access device may be selected as the DHCP client. A connection between the DHCP server and the DHCP client may be a wired connection. For example, communication between electrical power line communication modems is performed by using a power line communication (Power Line Communication, PLC) technology. As shown in FIG. 1, the method includes the following steps:
S11. A Dynamic Host Configuration Protocol DHCP server receives a DHCP discover message sent by a DHCP client.

In this step, the DHCP server receives a DHCP discover message (DHCP discover) sent by one or more DHCP clients. The DHCP client searches for a DHCP server in a network by using the DHCP discover message. The DHCP server may determine a DHCP client in the network by parsing the DHCP discover message, and learn that the DHCP client requires automatic configuration.

In the case of multiple DHCP clients, the DHCP server may determine, according to information such as a DHCP client identifier or a port number that are carried in the DHCP discover message, a DHCP client that requires automatic configuration.

S12. The DHCP server sends a DHCP offer message to the DHCP client.

After the DHCP client that requires automatic configuration is determined, the DHCP server sends the DHCP offer message (DHCP offer) to the DHCP client. The DHCP client learns the DHCP server that exists in the network by using the DHCP offer message, and the DHCP client establishes a communication connection to the DHCP server.

S13. The DHCP server receives a DHCP request message sent by the DHCP client, acquires configuration information that is corresponding to an SSID and configured by the DHCP server, and sends the configuration information to the DHCP client, so as to enable the DHCP client to perform configuration according to the configuration information.

After receiving the DHCP offer message sent by the DHCP server, the DHCP client may send the DHCP request message (DHCP request) to the DHCP server to acquire the configuration information that is corresponding to the SSID and configured by the DHCP server itself. The SSID is used to identify a wireless access network (such as a Wi-Fi access network). The configuration information refers to information that is corresponding to the SSID and used to configure the wireless access network, including a frequency band BAND, a key KEY, an encryption manner ENCRY, and the like. The DHCP client may configure and establish a wireless access network by using the configuration information corresponding to the SSID, and interact with a terminal device by using the wireless access network. Specifically, in a wireless access network that uses the DHCP client as an access point, a mobile terminal (such as a mobile phone) identifies and accesses the wireless access network according to the SSID.

The DHCP server receives the DHCP request message sent by the DHCP client, and acquires the configuration information that is corresponding to the SSID and configured by the DHCP server. The SSID is configured by the DHCP server itself, and can be allocated to the DHCP client to enable the DHCP client to perform configuration. Generally, the DHCP server may acquire all SSIDs configured by the DHCP server and configuration information corresponding to the SSIDs. It should be noted that the DHCP server may acquire the configuration information corresponding to the SSID after receiving the DHCP discover message, or acquire the configuration information corresponding to the SSID after receiving the DHCP request message. In this embodiment, an example in which the DHCP server acquires the configuration information corresponding to the SSID after receiving the DHCP request message is used for description.

To acquire the configuration information corresponding to the SSID, the DHCP server may acquire, from a configuration information database, the configuration information corresponding to the SSID, where the configuration information database (Configuration DataBase, Config DB) belongs to a part of the DHCP server or is independent of the DHCP server.

In a process of DHCP interaction, a format used to carry the configuration information is also of great importance. In different encryption and authentication manners, configuration information needed by configuration of the wireless access network is not exactly the same. It is relatively difficult to use a common format to describe the configuration information; however, in the present invention, this problem can be resolved by describing wireless access network configuration in an XML manner. Specifically, to send configuration information corresponding to a to-be-allocated SSID to the DHCP client, the DHCP server may encapsulate the configuration information by using an extensible markup language (Extensible Markup Language, XML) format, and properly perform coding, and then carry the configuration information in the XML format by using a reserved option OPTION in a DHCP response message. The configuration information is encapsulated by using the XML format, and therefore configuration information in different wireless access network modes can be effectively described.

After acquiring the configuration information corresponding to the SSID, the DHCP server may send, by using the DHCP response message (DHCP reply), the configuration information in the XML format to the DHCP client to respond to the DHCP request message sent by the DHCP client. Therefore, the DHCP client may parse out configuration information from the received DHCP response message and perform network configuration on the DHCP client according to the configuration information.

It can be learned from the above that according to the method for automatically synchronizing wireless access network configuration provided in the Embodiment 1 of the present invention, and according to a DHCP process, a DHCP client sends a DHCP discover message to a DHCP server, the DHCP server that receives the DHCP discover message sends a DHCP offer message to the DHCP client, acquires, for the DHCP client and when receiving a DHCP request message sent by the DHCP client, configuration information corresponding to an SSID that is configured by the DHCP server, and sends the configuration information to the DHCP client, so as to enable the DHCP client to perform configuration on the DHCP client according to the received configuration information, and therefore implement automatic configuration synchronization between the DHCP client and the DHCP server. That is, wireless access network configuration is synchronized to and carried in exchanged DHCP information in a manner of extending the DHCP process, and therefore automatic synchronization of network configuration is implemented. Because all devices that support the DHCP protocol may be extended to support synchronization of wireless access network configuration, compared with the prior art in which a complex configuration process needs to be performed to enable all devices to support a P1905.1 link, the solution provided in Embodiment 1 of the present invention can improve commonality of automatic synchronization of network configuration.

In a specific embodiment of Embodiment 1, the DHCP server monitors whether configuration information of the DHCP server has changed; when the configuration information has changed, the DHCP server sends the changed configuration information to the DHCP client, so as to enable the DHCP client to re-perform configuration according to the configuration information, and therefore ensure that the DHCP client is synchronized with the DHCP server in real time. Specifically, when the configuration information of the DHCP server has changed, the DHCP server may first determine whether a part of the changed configuration information is corresponding to information currently configured by the DHCP client. If the corresponding part exists, the DHCP server may send the changed configuration information to the DHCP client; or if the corresponding part does not exist, the DHCP server does not need to send the changed configuration information.

In another specific embodiment of Embodiment 1 of the present invention, the DHCP discover message carries first verification information, or the DHCP request message carries first verification information, or both the DHCP discover message and the DHCP request message carry first verification information. In addition, the DHCP server stores second verification information. The DHCP server may determine whether the second verification information is separately the same as two pieces of first verification information by comparing the first verification information in the DHCP discover message with the second verification information stored by the DHCP server, or comparing the first verification information in the DHCP request message with the second verification information stored by the DHCP server, or separately comparing the first verification information that is in the DHCP discover message and the first verification information that is in the DHCP request message with the second verification information stored by the DHCP server, so as to determine whether the DHCP server can serve the DHCP client, for example, determine whether the DHCP client and the DHCP server belong to a same family or enterprise. When the DHCP discover message sent by the DHCP client carries the first verification information and the first verification information is the same as the verification information stored by the DHCP server itself, the DHCP server determines that the DHCP server can serve the DHCP client. At this time, the DHCP server determines the SSID for the DHCP client and acquires the configuration information corresponding to the SSID. When the first verification information is different from the second verification information stored by the DHCP server itself, the DHCP server may broadcast a DHCP offer message that does not include the SSID. When the DHCP request message sent by the DHCP client carries the first verification information, after the DHCP server receives the DHCP request message, the DHCP server may first determine whether the first verification information and the second verification information stored by the DHCP server are the same, and then parse the DHCP request message.

In another specific embodiment of the embodiments of the present invention, in addition to acquiring the configuration information and sending the configuration information to the DHCP client, as shown in step S13, after acquiring the DHCP discover message, the DHCP server may determine, for the DHCP client, an SSID configured by the DHCP server, and acquire, from a configuration information database, the configuration information corresponding to the SSID. At this time, the configuration information corresponding to the SSID may also be carried in the DHCP offer message sent by the DHCP server to the DHCP client. Similar to the foregoing embodiment, the configuration information may be encapsulated by using an XML format and carried in a reserved option OPTION field of the DHCP offer message, such as OPTIONs 226-233. Therefore, after receiving the DHCP offer message, the DHCP client may parse out, from the DHCP offer message, an SSID and configuration information corresponding to the SSID, and pre-select, according to requirements of different modes or a capability of the DHCP client, an SSID and configuration information corresponding to the SSID. Optionally, when sending the DHCP request message to the DHCP server, the DHCP client may carry a selection result in the DHCP request message, and in this way, the DHCP server may learn the selection result of the DHCP client by parsing the DHCP request message, and therefore acquire configuration information corresponding to a corresponding SSID.

In another specific embodiment of Embodiment 1 of the present invention, multiple SSIDs are configured by the DHCP server itself. Therefore, multiple SSIDs and configuration information corresponding to the multiple SSIDs are sent to the DHCP client. For example, the DHCP server itself is configured with three SSIDs. Therefore, after receiving the DHCP request message, the DHCP server may acquire a first SSID and first configuration information corresponding to the first SSID, a second SSID and second configuration information corresponding to the second SSID, and a third SSID and third configuration information corresponding to the third SSID. The DHCP server may encapsulate, by using the XML format, configuration information corresponding to each SSID, and carries the configuration information by using a reserved OPTION. Configuration information corresponding to multiple SSIDs can by carried by multiple reserved OPTIONs. For example, an OPTION 226 may be used to carry the first SSID and the first configuration information corresponding to the first SSID, and an OPTION 227 may be used to carry the second SSID and the second configuration information corresponding to the second SSID. For the DHCP client, the DHCP client may select configuration information to perform configuration according to requirements of different modes or a capability of the DHCP client. For example, the DHCP server sends configuration information corresponding to multiple (for example, up to eight) SSIDs to the DHCP client. The DHCP client performs configuration according to configuration information corresponding to a part or all of the SSIDs, and preferably, the DHCP client is configured the same as the DHCP server. According to this variant embodiment, because the DHCP client may select configuration information to perform configuration according to requirements of different modes or a capability of the DHCP client, an effect of synchronization configuration can be optimized.

### Embodiment 2

FIG. 2 is a flowchart of a method for automatically synchronizing wireless access network configuration according to Embodiment 2 of the present invention. This method may be implemented by an apparatus used as a DHCP client. As described in Embodiment 1, in addition to a wireless access device connected to an ingress of an external network, another wireless access device may be selected as the DHCP client. Corresponding to the DHCP client, an apparatus that has a control processing function, supports a DHCP protocol and can communicate with the DHCP client may be selected as a DHCP server, for example, a wireless access device connected to the ingress of the external network. A connection between the DHCP server and the DHCP client may be a wired connection; for example, "power line communication modems" communicate with each other by using a PLC technology. As shown in FIG. 2, the method includes the following steps:
S21. A Dynamic Host Configuration Protocol DHCP client sends a DHCP discover message.

In this step, the DHCP client searches for a DHCP server in a network by using a DHCP discover message. The DHCP discover message may carry a DHCP client identifier that is used to identify the DHCP client from which the DHCP discover message comes. In this way, though multiple DHCP clients exist, the DHCP server can distinguish each DHCP client according to the DHCP client identifier.

As described in Embodiment 1, optionally, the DHCP server may parse the DHCP discover message, determine, for the DHCP client that is corresponding to the DHCP client identifier, a service set identifier SSID configured by the DHCP server, and acquire configuration information corresponding to the SSID.

S22. The DHCP client receives a DHCP offer message sent by the DHCP server.

As described in S12, after receiving the DHCP discover message, the DHCP server sends a DHCP offer message to the DHCP client. Therefore, the DHCP client may learn the DHCP server exists in the network, thereby establishing a communication connection with the DHCP server.

If the DHCP server determines the SSID in step S21 and acquires the configuration information corresponding to the SSID, in this step, the DHCP server can acquire, by parsing the DHCP offer message, the SSID that is carried in the DHCP offer message, and select, according to requirements of different modes and a capability of the DHCP server, a to-be-allocated SSID and configuration information corresponding to the to-be-allocated SSID.

S23. The DHCP client sends a DHCP request message, so as to enable the DHCP server that receives the DHCP request message to acquire configuration information that is corresponding to an SSID and configured by the DHCP server.

As described in S13, after receiving the DHCP request message, the DHCP server may acquire, from a configuration information database, configuration information corresponding to the SSID.

If the DHCP request message carries a result of the SSID and the configuration information corresponding to the SSID that are selected by the DHCP client according to requirements of different modes and a capability of the DHCP client, the DHCP server may learn the selection result of the DHCP client by parsing the DHCP request message, and therefore acquire a corresponding SSID and configuration information corresponding to the corresponding SSID.

S24. The DHCP client receives the configuration information sent by the DHCP server, and performs configuration according to the configuration information.

It can be learned from the above that according to the method for automatically synchronizing wireless access network configuration that is provided in Embodiment 2 of the present invention, in a manner of extending a DHCP process, wireless access network configuration is synchronized to and carried in exchanged DHCP information, and therefore automatic synchronization of network configuration is implemented. Because all devices that support the DHCP protocol may be extended to support synchronization of wireless access network configuration, compared with the prior art in which a complex configuration process needs to be performed to enable all devices to support a P1905.1 link, the solution provided in Embodiment 2 of the present invention can improve commonality of automatic synchronization of network configuration.

Corresponding to a specific embodiment of the foregoing Embodiment 1, in a specific embodiment of the Embodiment 2, the DHCP discover message carries first verification information, or the DHCP request message carries first verification information, or both the DHCP discover message and the DHCP request message carry first verification information. In addition, the DHCP server stores second verification information. The DHCP server may determine whether the second verification information is separately the same as two pieces of first verification information by comparing the first verification information in the DHCP discover message with the second verification information, or comparing the first verification information in the DHCP request message with the second verification information, or separately comparing the first verification information that is in the DHCP discover message and the first verification information that is in the DHCP request message with the second verification information stored by the DHCP server itself, so as to determine whether the DHCP server can serve the DHCP client, and then parse the DHCP request message.

Corresponding to a specific embodiment of the foregoing Embodiment 1, in another specific embodiment of the Embodiment 2, multiple SSIDs are configured by the DHCP server itself. Therefore, multiple SSIDs and configuration information respectively corresponding to the multiple SSIDs are sent by the DHCP server to the DHCP client. The DHCP client may select, according to the requirements of the different modes or the capability of the DHCP client, configuration information that is respectively corresponding to one or more SSIDs to perform configuration. Preferably, the DHCP client is configured the same as the DHCP server. Because the DHCP client may select configuration information to perform configuration according to requirements of different modes or a capability of the DHCP client, an effect of synchronization configuration can be optimized.

### Embodiment 3

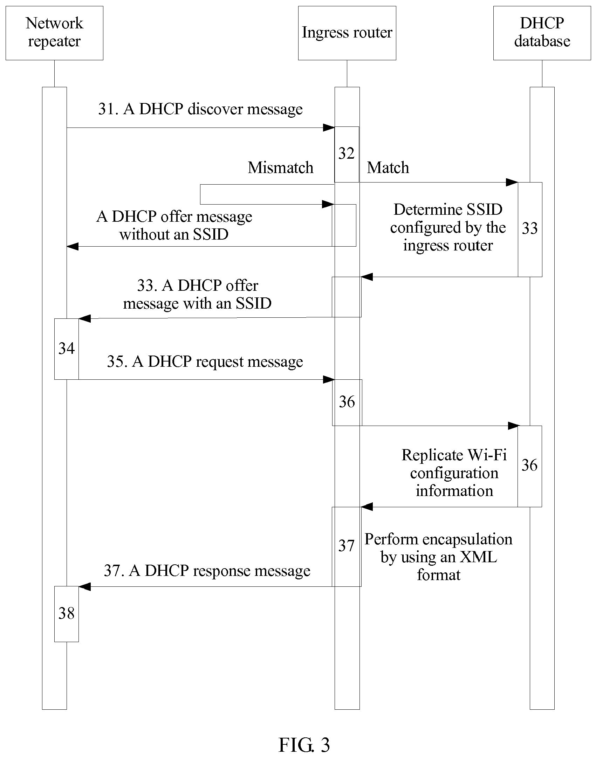

To describe the methods for automatically synchronizing wireless access network configuration that are provided in Embodiments 1 and 2 of the present invention in more detail, an example in which a DHCP server and a DHCP client perform Wi-Fi configuration synchronization on the basis of a DHCP protocol is used for the following description. FIG. 3 is a signaling flowchart of a method for automatically synchronizing wireless access network configuration according to Embodiment 3 of the present invention. In this embodiment, an example in which the DHCP server is a router connected to an ingress of an external network (may also be referred to as an ingress router), the DHCP client is a network repeater within a coverage area of the ingress router, and configuration information is Wi-Fi configuration information is used for description. As shown in FIG. 3, the method includes the following steps:
Step 31. A network repeater broadcasts a DHCP discover discovery message that carries first verification information.

The first verification information may be carried by using a reserved option OPTION of the DHCP discover message, such as an OPTION 225. The ingress router may determine, according to whether the first verification information and second verification information stored by the ingress router are the same, whether a C/S relationship exists between the network repeater and the ingress router. The first verification information may be a string such as "Huawei_00E0FC_WLAN".

Step 32. An ingress router receives the DHCP discover message and verifies the first verification information in the DHCP discover message.

After receiving the DHCP discover message from the network repeater, the ingress router determines whether the DHCP discover message carries the OPTION 225, and verifies whether the first verification information carried by the DHCP discover message matches the second verification information stored by the ingress router. If the second verification information is the string "Huawei_00E0FC_WLAN", the first verification information matches the second verification information, and it can be determined that the CS/relationship exists between the network repeater and the ingress router.

Step 33. The ingress router determines, for the network repeater, an SSID that is configured by the ingress router, and sends a DHCP offer offer message to the network repeater.

When determining that the first verification information matches the second verification information, the ingress router acquires, for the network repeater, the SSID configured by the ingress router and Wi-Fi configuration information corresponding to the SSID, and sends the SSID and the Wi-Fi configuration information to the network repeater by using the DHCP offer message.

Optionally, the ingress router may encapsulate, by using an XML format, the Wi-Fi configuration information corresponding to the SSID and carry the Wi-Fi configuration information by using a reserved option OPTION of a DHCP offer message, such as OPTIONs 226-233. Therefore, the Wi-Fi configuration information corresponding to the SSID is sent when the DHCP offer message is sent.

Further, if multiple SSIDs exist, the ingress router may encapsulate, by using the XML format, and send, by using the DHCP offer message, the multiple SSIDs and Wi-Fi configuration information corresponding to the multiple SSIDs.

Step 34. The network repeater receives the DHCP offer message.

Step 35. The network repeater broadcasts a DHCP request message.

The network repeater may carry, in the DHCP request message, an SSID that is selected according to requirements of different modes and a capability of the network repeater.

Step 36. The ingress router receives the DHCP request message and replicates the Wi-Fi configuration information.

The ingress router receives a DHCP request and verifies first verification information in the DHCP request. When the first verification information and the second verification information are the same, the ingress router replicates the Wi-Fi configuration information of the ingress router from a DHCP database, where the configuration information is corresponding to the SSID included in the DHCP request message.

Step 37. The ingress router encapsulates the configuration information by using the XML format and sends a DHCP reply response message.

The ingress router encapsulates the Wi-Fi configuration information of the ingress router by using an XML format, and carries the Wi-Fi configuration information by using another reserved OPTION. One piece of Wi-Fi configuration information in the XML format is carried by using one reserved OPTION and then sent by using the DHCP reply message. If the ingress router sends, by using one DHCP reply message, Wi-Fi configuration information corresponding to multiple SSIDs, the ingress router may encapsulate Wi-Fi configuration information corresponding to each SSID as one piece of information in the XML format, and respectively carry multiple pieces of Wi-Fi configuration information in the XML format by using multiple reserved OPTIONs, such as OPTIONs 226-233.

An example of a specific XML format is as follows:

```
  <SSID>
  <NAME>ssid1_name</NAME>
  <BAND>2</BAND> (2 indicates 2.4G, 5 indicates 5G, and 2 is used as an example here.)
  <BEACON>0</BEACON> (0 to 8 indicate different security modes, and 0 is used as an
  example here.)
  <KEY>xxx</KEY> (x indicates a character, and the same holds true below.)
  <ENCRY>0</ENCRY>
  <AUTH>0</AUTH>
  <RSERVER>xxx.xxx.xxx.xxx</RSERVER>
  <PORT>xx</PORT>
  <SKEY>xxxxx</SKEY>
  </SSID>
```

According to the requirements of different modes, the ingress router may select different configuration information. In addition, a manner of coding may be used to transmit different modes, and a string does not need to be transmitted.

Step 38. The network repeater receives the DHCP reply message and performs configuration according to Wi-Fi configuration information in the DHCP reply message.

The network repeater parses out Wi-Fi configuration information in the XML format from the DHCP reply message. For example, the DHCP reply message includes multiple self-defined OPTIONs, and each OPTION includes Wi-Fi configuration information corresponding to one SSID. The network repeater parses out, according to an SSID selected by the network repeater, Wi-Fi configuration information corresponding to the SSID. After the parsing is completed, the network repeater configures, according to the acquired Wi-Fi configuration information, a Wi-Fi module of the network repeater, and the Wi-Fi module is made effective.

It can be learned from the above that according to the method for automatically synchronizing wireless access network configuration that is provided in Embodiment 3 of the present invention, in a manner of extending a DHCP process, Wi-Fi configuration is synchronized to and carried in exchanged DHCP information, and therefore automatic synchronization of network configuration is implemented. Because all devices that support the DHCP protocol may be extended to support Wi-Fi configuration synchronization, commonality of automatic synchronization of network configuration can be improved.

### Embodiment 4

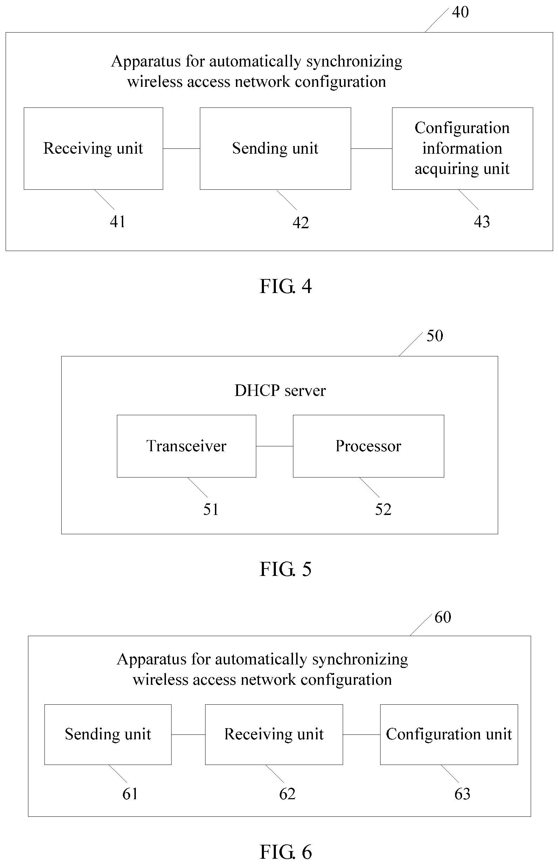

Corresponding to the method for automatically synchronizing wireless access network configuration that is provided in Embodiment 1 of the present invention, the present invention further provides an apparatus for automatically synchronizing wireless access network configuration. FIG. 4 is a schematic structural diagram of an apparatus for automatically synchronizing wireless access network configuration according to Embodiment 4 of the present invention. As shown in FIG. 4, an apparatus 40 includes:
a receiving unit 41, configured to receive a DHCP discover message sent by a Dynamic Host Configuration Protocol DHCP client;
a sending unit 42, configured to send a DHCP offer message to the DHCP client; where
the receiving unit 41 is further configured to receive a DHCP request message sent by the DHCP client; and
a configuration information acquiring unit 43, configured to acquire configuration information that is corresponding to an SSID and configured by the apparatus 40 itself; where
the sending unit 42 is further configured to send the configuration information that is acquired by the configuration information acquiring unit 43 and corresponding to the SSID to the DHCP client, so as to enable the DHCP client to perform configuration according to the configuration information.

According to the apparatus for automatically synchronizing wireless access network configuration that is provided in Embodiment 4 of the present invention, in a manner of extending a DHCP process, wireless access network configuration is synchronized to and carried in exchanged DHCP information, and therefore automatic synchronization of network configuration is implemented. Because all devices that support the DHCP protocol may be extended to support synchronization of wireless access network configuration, compared with the prior art in which a complex configuration process needs to be performed to enable all devices to support a P1905.1 link, the solution provided in Embodiment 4 of the present invention can improve commonality of automatic synchronization of network configuration.

In a specific embodiment of Embodiment 4 of the present invention, the sending unit 42 specifically includes: an XML encapsulation module, configured to encapsulate, by using an extensible markup language XML format, the configuration information that is acquired by the configuration information acquiring unit 43 and corresponding to the SSID; a configuration information carrying module, configured to carry the configuration information in the XML format by using a reserved option OPTION in a DHCP response message; and a sending module, configured to send, by using the DHCP response message, the configuration information in the XML format to the DHCP client.

In another specific embodiment of Embodiment 4 of the present invention, the DHCP discover message carries first verification information, or the DHCP request message carries first verification information, or both the DHCP discover message and the DHCP request message carry first verification information. In addition, the apparatus 40 itself stores second verification information. The sending unit 42 is specifically configured to: when it is determined that the first verification information in the DHCP discover message is the same as second verification information stored by the apparatus 40 itself, send the DHCP offer message to the DHCP client; and the configuration information acquiring unit 43 is specifically configured to: when it is determined that the first verification information in the DHCP request message is the same as the second verification information stored by the apparatus 40 itself, acquire the configuration information that is corresponding to the SSID and configured by the apparatus.

In still another specific embodiment of Embodiment 4 of the present invention, the configuration information acquiring unit 43 is further configured to: monitor whether the configuration information stored by the apparatus has changed; and when the configuration information has changed, re-acquire the changed configuration information; and the sending unit 42 is further configured to send the changed configuration information to the DHCP client, so as to enable the DHCP client to re-perform configuration according to the changed configuration information.

### Embodiment 5

Corresponding to the method for automatically synchronizing wireless access network configuration that is provided in Embodiment 1 of the present invention, the present invention further provides a Dynamic Host Configuration Protocol DHCP server. FIG. 5 is a schematic structural diagram of a DHCP server according to Embodiment 5 of the present invention. As shown in FIG. 5, the DHCP server 50 includes:
a transceiver 51, configured to receive a DHCP discover message sent by a DHCP client; where
the transceiver 51 is further configured to send a DHCP offer message to the DHCP client; and
the transceiver 51 is further configured to receive a DHCP request message sent by the DHCP client; and
a processor 52, configured to acquire configuration information that is corresponding to an SSID and configured by the DHCP server 50 itself; where
the transceiver 51 is further configured to send the configuration information that is acquired by the processor 52 and corresponding to the SSID to the DHCP client, so as to enable the DHCP client to perform configuration according to the configuration information.

According to the DHCP server provided in Embodiment 5 of the present invention, wireless access network configuration is synchronized to and carried in exchanged DHCP information in a manner of extending the DHCP process, and therefore automatic synchronization of network configuration is implemented. Because all devices that support the DHCP protocol may be extended to support synchronization of wireless access network configuration, compared with the prior art in which a complex configuration process needs to be performed to enable all devices to support a P1905.1 link, the solution provided in Embodiment 5 of the present invention can improve commonality of automatic synchronization of network configuration.

In a specific embodiment of Embodiment 5 of the present invention, the processor 52 is further configured to: encapsulate, by using an extensible markup language XML format, the acquired configuration information corresponding to the SSID, and carry the configuration information in the XML format by using a reserved option OPTION in a DHCP response message. The transceiver 51 is specifically configured to send, by using the DHCP response message, the configuration information in the XML format to the DHCP client.

In another specific embodiment of Embodiment 5 of the present invention, the DHCP discover message carries first verification information, or the DHCP request message carries first verification information, or both the DHCP discover message and the DHCP request message carry first verification information. In addition, the DHCP server 50 itself stores second verification information. The processor 52 is specifically configured to determine whether the first verification information in the DHCP discover message is the same as second verification information stored by the DHCP server 50 itself. The transceiver 51 is specifically configured to: when the processor 52 determines that the first verification information in the DHCP discover message is the same as the second verification information stored by the DHCP server 50 itself, send the DHCP offer message to the DHCP client. The processor 52 is specifically configured to: determine whether the second verification information in the DHCP request message is the same as the first verification information stored by the DHCP server 50 itself; and when the second verification information in the DHCP request message is the same as the first verification information stored by the DHCP server 50 itself, acquire the configuration information that is corresponding to the SSID and configured by the DHCP server 50 itself.

In still another specific embodiment of Embodiment 5 of the present invention, the processor 52 is further configured to: monitor whether the configuration information stored by the DHCP server 50 itself has changed; and when the configuration information has changed, re-acquire the changed configuration information; and the transceiver 51 is further configured to send the changed configuration information to the DHCP client, so as to enable the DHCP client to re-perform configuration according to the changed configuration information.

### Embodiment 6

Corresponding to the method for automatically synchronizing wireless access network configuration that is provided in Embodiment 2 of the present invention, the present invention further provides an apparatus for automatically synchronizing wireless access network configuration. FIG. 6 is a schematic structural diagram of an apparatus for automatically synchronizing wireless access network configuration according to Embodiment 6 of the present invention. As shown in FIG. 6, the apparatus 60 includes:
a sending unit 61, configured to send a DHCP discover message;
a receiving unit 62, configured to receive a DHCP offer message sent by a DHCP server; where
the sending unit 61 is further configured to send a DHCP request message, so as to enable the DHCP server that receives the DHCP request message to acquire configuration information that is corresponding to an SSID and configured by the DHCP server; and
the receiving unit 62 is further configured to receive the configuration information that is sent by the DHCP server and corresponding to the SSID; and
a configuration unit 63, configured to perform configuration according to the configuration information received by the receiving unit 62.

For the SSID configured by the DHCP server itself, optionally, the SSID includes multiple SSIDs; the sending unit 61 is specifically configured to send the DHCP request message, so as to enable the DHCP server that receives the DHCP request message to acquire multiple pieces of configuration information, where the multiple pieces of configuration information are respectively corresponding to the multiple SSIDs that are to-be-allocated; the receiving unit 62 is specifically configured to receive the multiple pieces of configuration information sent by the DHCP server; and the configuration unit 63 is specifically configured to perform configuration according to one piece or multiple pieces of configuration information received by the receiving unit 62. Because the configuration unit 63 may perform configuration according to configuration information corresponding to a part or all of the SSIDs, an effect of synchronization configuration may be optimized.

According to the apparatus for automatically synchronizing wireless access network configuration that is provided in Embodiment 6 of the present invention, in a manner of extending a DHCP process, wireless access network configuration is synchronized to and carried in exchanged DHCP information, and therefore automatic synchronization of network configuration is implemented. Because all devices that support the DHCP protocol may be extended to support synchronization of wireless access network configuration, compared with the prior art in which a complex configuration process needs to be performed to enable all devices to support a P1905.1 link, the solution provided in Embodiment 6 of the present invention can improve commonality of automatic synchronization of network configuration.

### Embodiment 7

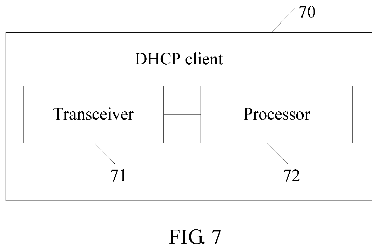

Corresponding to the method for automatically synchronizing wireless access network configuration that is provided in Embodiment 2 of the present invention, the present invention further provides a Dynamic Host Configuration Protocol DHCP client. FIG. 7 is a schematic structural diagram of a DHCP client according to Embodiment 7 of the present invention. As shown in FIG. 7, a DHCP client 70 includes:
a transceiver 71, configured to send a DHCP discover message; where
the transceiver 71 is further configured to receive a DHCP offer message sent by a DHCP server;
the transceiver 71 is further configured to send a DHCP request message, so as to enable the DHCP server that receives the DHCP request message to acquire configuration information that is corresponding to an SSID and configured by the DHCP server; and
the transceiver 71 is further configured to receive the configuration information that is sent by the DHCP server and corresponding to the SSID; and
a processor 72, configured to perform configuration according to the configuration information received by the transceiver 71.

Optionally, the SSID includes multiple SSIDs; the transceiver 71 is specifically configured to send the DHCP request message, so as to enable the DHCP server that receives the DHCP request message to acquire multiple pieces of configuration information, where the multiple pieces of configuration information are respectively corresponding to the multiple SSIDs; the transceiver 71 is specifically configured to receive the multiple pieces of configuration information sent by the DHCP server; and the processor 72 is specifically configured to perform configuration according to one piece or multiple pieces of configuration information received by the transceiver 71. Because the processor 72 may perform configuration according to configuration information corresponding to a part or all of the SSIDs, an effect of synchronization configuration may be optimized.

According to the DHCP client provided in Embodiment 7 of the present invention, wireless access network configuration is synchronized to and carried in DHCP interaction in a manner of extending the DHCP process, and therefore automatic synchronization of network configuration is implemented. Because most devices support the DHCP protocol, and all devices that support the DHCP protocol may be extended to support synchronization of wireless access network configuration, compared with the prior art in which a complex configuration process needs to be performed to enable all devices to support a P1905.1 link, the solution provided in Embodiment 7 of the present invention can improve commonality of automatic synchronization of network configuration.

Each embodiment in the specification is described with emphasis. The same or similar parts in the embodiments are references to each other. Each embodiment focuses on description of a difference from the other embodiments. Especially, an apparatus embodiment is basically similar to a method embodiment, and therefore is described briefly; for related parts, reference may be made to partial descriptions in the method embodiment.

It should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

A person of ordinary skill in the art may understand that each aspect of the present invention or a possible implementation manner of each aspect may be specifically implemented as a system, a method, or a computer program product. Therefore, each aspect of the present invention or a possible implementation manner of each aspect may use forms of hardware only embodiments, software only embodiments (including firmware, resident software, and the like), or embodiments with a combination of software and hardware, which are uniformly referred to as "circuit", "module", or "system" herein.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for automatically synchronizing wireless access network configuration, comprising:
receiving (S11), by a Dynamic Host Configuration Protocol DHCP server, a DHCP discover message sent by a DHCP client, wherein the DHCP server is a wireless access device connected to an ingress of an external network and the DHCP client is another wireless access device connected to the DHCP server;
sending (SI2), by the DHCP server, a DHCP offer message to the DHCP client; and
receiving (S13), by the DHCP server, a DHCP request message sent by the DHCP client, acquiring configuration information that is corresponding to an SSID, wherein the configuration information and the SSID are configured by the DHCP server, and sending the configuration information corresponding to the SSID to the DHCP client, so as to enable the DHCP client to perform configuration of a wireless access network according to the configuration information.

2. The method according to claim 1, wherein the sending the configuration information corresponding to the SSID to the DHCP client comprises:
encapsulating, by using an extensible markup language XML format, the configuration information corresponding to the SSID;
carrying the configuration information in the XML format by using a reserved option OPTION in a DHCP response message; and
sending, by using the DHCP response message, the configuration information in the XML format to the DHCP client.

3. The method according to claim 1 or 2, wherein:
at least one of the DHCP discover message and the DHCP request message carries first verification information;
the sending, by the DHCP server, a DHCP offer message to the DHCP client comprises:
when it is determined that the first verification information in the DHCP discover message is the same as second verification information stored by the DHCP server, sending, by the DHCP server, the DHCP offer message to the DHCP client; and
the acquiring configuration information that is corresponding to the SSID and configured by the DHCP server comprises:
when it is determined that the first verification information in the DHCP request message is the same as the second verification information stored by the DHCP server, acquiring the configuration information that is corresponding to the SSID and configured by the DHCP server.

4. The method according to any one of claims 1 to 3, wherein after the sending the configuration information corresponding to the SSID to the DHCP client, the method further comprises:
monitoring, by the DHCP server, whether the configuration information stored by the DHCP server has changed; and
when the configuration information stored by the DHCP server has changed, acquiring the changed configuration information, and sending the changed configuration information to the DHCP client, so as to enable the DHCP client to re-perform configuration according to the changed configuration information.

5. An apparatus (40) for automatically synchronizing wireless access network configuration, comprising:
a receiving unit (41), configured to receive a DHCP discover message sent by a Dynamic Host Configuration Protocol DHCP client, wherein the apparatus (40) is used as DHCP server and is a wireless access device connected to an ingress of an external network and the DHCP client is another wireless access device connected to the DHCP server;
a sending unit (42), configured to send a DHCP offer message to the DHCP client; wherein
the receiving unit (41) is further configured to receive a DHCP request message sent by the DHCP client; and
a configuration information acquiring unit (43), configured to acquire configuration information that is corresponding to an SSID, wherein the configuration information and the SSID are configured by the apparatus (40); wherein
the sending unit (42) is further configured to send the configuration information that is acquired by the configuration information acquiring unit (43) and corresponding to the SSID to the DHCP client, so as to enable the DHCP client to perform configuration of a wireless access network according to the configuration information.

6. The apparatus (40) according to claim 5, wherein the sending unit specifically comprises:
an XML encapsulation module, configured to encapsulate, by using an extensible markup language XML format, the configuration information that is acquired by the configuration information acquiring unit and corresponding to the SSID;
a configuration information carrying module, configured to carry the configuration information in the XML format by using a reserved option OPTION in a DHCP response message; and
a sending module, configured to send, by using the DHCP response message, the configuration information in the XML format to the DHCP client.

7. The apparatus (40) according to claim 5 or 6, wherein:
the DHCP discover message carries first verification information, or the DHCP request message carries first verification information, or both the DHCP discover message and the DHCP request message carry first verification information;
the sending unit (42) is specifically configured to:
when it is determined that the first verification information in the DHCP discover message is the same as second verification information stored by the apparatus (40), send the DHCP offer message to the DHCP client; and
the configuration information acquiring unit is specifically configured to:
when it is determined that the first verification information in the DHCP request message is the same as the second verification information stored by the apparatus (40), acquire the configuration information that is corresponding to the SSID and configured by the apparatus (40).

8. The apparatus (40) according to any one of claims 5 to 7, wherein the configuration information acquiring unit (43) is further configured to:
monitor whether the configuration information stored by the apparatus has changed, and
when the configuration information stored by the apparatus (40) has changed, re-acquire the changed configuration information; and
the sending unit (42) is further configured to send the changed configuration information to the DHCP client, so as to enable the DHCP client to re-perform configuration according to the changed configuration information.

9. A method for automatically synchronizing wireless access network configuration, comprising:
sending (S21), by a Dynamic Host Configuration Protocol DHCP client, a DHCP discover message to a DHCP server, wherein the DHCP server is a wireless access device connected to an ingress of an external network and the DHCP client is another wireless access device connected to the DHCP server;
receiving (S22), by the DHCP client, a DHCP offer message sent by a DHCP server;
sending (S23), by the DHCP client, a DHCP request message, so as to enable the DHCP server that receives the DHCP request message to acquire configuration information that is corresponding to an SSID, wherein the configuration information and the SSID are configured by the DHCP server; and
receiving (S24), by the DHCP client, the configuration information that is sent by the DHCP server and corresponding to the SSID, and performing configuration of a wireless access network according to the configuration information.

10. The method according to claim 9, wherein:
the DHCP discover message carries first verification information, or the DHCP request message carries first verification information, or both the DHCP discover message and the DHCP request message carry first verification information.

11. An apparatus (60) for automatically synchronizing wireless access network configuration, wherein the apparatus is a wireless access device and a DHCP client connected to a DHCP server and the DHCP server is another wireless access device connected to an ingress of an external network, comprising:
a sending unit (61), configured to send a DHCP discover message;
a receiving unit (62), configured to receive a DHCP offer message sent by a DHCP server; wherein
the sending unit (61) is further configured to send a DHCP request message, so as to enable the DHCP server that receives the DHCP request message to acquire configuration information that is corresponding to an SSID, wherein the configuration information and the SSID are configured by the DHCP server; and
the receiving unit (62) is further configured to receive the configuration information that is sent by the DHCP server and corresponding to the SSID; and
a configuration unit (63), configured to perform configuration of a wireless access network according to the configuration information received by the receiving unit (62).

## Patentansprüche

1. Verfahren zum automatischen Synchronisieren einer Drahtloszugangsnetzkonfiguration, umfassend:
Empfangen (S11), durch einen Dynamic Host Configuration Protocol-DHCP-Server, einer DHCP-Entdeckungsnachricht, die durch einen DHCP-Client gesendet wurde, wobei der DHCP-Server eine Drahtloszugangsvorrichtung ist, die mit einem Eingang eines externen Netzes verbunden ist, und wobei der DHCP-Client eine andere Drahtloszugangsvorrichtung ist, die mit dem DHCP-Server verbunden ist;
Senden (S12), durch den DHCP-Server, einer DHCP-Angebotsnachricht an den DHCP-Client; und
Empfangen (S13), durch den DHCP-Server, einer DHCP-Anforderungsnachricht, die durch den DHCP-Client gesendet wurde, Erfassen einer Konfigurationsinformation, die einer SSID entspricht, wobei die Konfigurationsinformation und die SSID durch den DHCP-Server konfiguriert werden, und Senden der der SSID entsprechenden Konfigurationsinformation an den DHCP-Client, um es dem DHCP-Client zu ermöglichen, die Konfiguration eines Drahtloszugangsnetzes gemäß der Konfigurationsinformation durchzuführen.

2. Verfahren nach Anspruch 1, wobei das Senden der der SSID entsprechenden Konfigurationsinformation an den DHCP-Client umfasst:
Verkapseln, unter Verwendung eines Extensible Markup Language-XML-Formats, der der SSID entsprechenden Konfigurationsinformation;
Tragen der Konfigurationsinformation im XML-Format unter Verwendung einer vorbehaltenen Option OPTION in einer DHCP-Antwortnachricht; und
Senden, unter Verwendung der DHCP-Antwortnachricht, der Konfigurationsinformation im XML-Format an den DHCP-Client.

3. Verfahren nach Anspruch 1 oder 2, wobei:
wenigstens eine von der DHCP-Entdeckungsnachricht und der DHCP-Anforderungsnachricht eine erste Verifizierungsinformation trägt;
das Senden, durch den DHCP-Server, einer DHCP-Angebotsnachricht an den DHCP-Client umfasst:
wenn bestimmt wird, dass die erste Verifizierungsinformation in der DHCP-Entdeckungsnachricht gleich ist wie eine zweite Verifizierungsinformation, die durch den DHCP-Server gespeichert wird, Senden, durch den DHCP-Server, der DHCP-Angebotsnachricht an den DHCP-Client; und
das Erfassen der Konfigurationsinformation, die der SSID entspricht und durch den DHCP-Server konfiguriert wird, umfasst:
wenn bestimmt wird, dass die erste Verifizierungsinformation in der DHCP-Anforderungsnachricht gleich ist wie die zweite Verifizierungsinformation, die durch den DHCP-Server gespeichert wird, Erfassen der Konfigurationsinformation, die der SSID entspricht und durch den DHCP-Server konfiguriert wird.

4. Verfahren nach einem der Ansprüche 1 bis 3, wobei nach dem Senden der der SSID entsprechenden Konfigurationsinformation an den DHCP-Client das Verfahren ferner umfasst:
Überwachen, durch den DHCP-Server, ob sich die durch den DHCP-Server gespeicherte Konfigurationsinformation verändert hat; und
wenn sich die durch den DHCP-Server gespeicherte Konfigurationsinformation verändert hat, Erfassen der veränderten Konfigurationsinformation und Senden der veränderten Konfigurationsinformation an den DHCP-Client, um es dem DHCP-Client zu ermöglichen, die Konfiguration gemäß der veränderten Konfigurationsinformation neuerlich durchzuführen.

5. Vorrichtung (40) zum automatischen Synchronisieren einer Drahtloszugangsnetzkonfiguration, umfassend:
eine Empfangseinheit (41), die dafür konfiguriert ist, eine DHCP-Entdeckungsnachricht zu empfangen, die durch einen Dynamic Host Configuration Protocol-DHCP-Client gesendet wurde, wobei die Vorrichtung (40) als DHCP-Server verwendet wird und eine Drahtloszugangsvorrichtung ist, die mit einem Eingang eines externen Netzes verbunden ist, und wobei der DHCP-Client eine andere Drahtloszugangsvorrichtung ist, die mit dem DHCP-Server verbunden ist;
eine Sendeeinheit (42), die dafür konfiguriert ist, eine DHCP-Angebotsnachricht an den DHCP-Client zu senden; wobei
die Empfangseinheit (41) ferner dafür konfiguriert ist, eine DHCP-Anforderungsnachricht zu empfangen, die durch den DHCP-Client gesendet wurde; und
eine Konfigurationsinformations-Erfassungseinheit (43), die dafür konfiguriert ist, eine Konfigurationsinformation zu empfangen, die einer SSID entspricht, wobei die Konfigurationsinformation und die SSID durch die Vorrichtung (40) konfiguriert werden; wobei
die Sendeeinheit (42) ferner dafür konfiguriert ist, die Konfigurationsinformation, die durch die Konfigurationsinformations-Erfassungseinheit (43) erfasst wird und der SSID entspricht, an den DHCP-Client zu senden, um es dem DHCP-Client zu ermöglichen, die Konfiguration eines Drahtloszugangsnetzes gemäß der Konfigurationsinformation durchzuführen.

6. Vorrichtung (40) nach Anspruch 5, wobei die Sendeeinheit spezifisch umfasst:
ein XML-Verkapselungsmodul, das dafür konfiguriert ist, unter Verwendung eines Extensible Markup Language-XML-Formats die Konfigurationsinformation zu verkapseln, die durch die Konfigurationsinformations-Erfassungseinheit erfasst wird und der SSID entspricht;
ein Konfigurationsinformationsträgermodul, das dafür konfiguriert ist, die Konfigurationsinformation im XML-Format unter Verwendung einer vorbehaltenen Option OPTION in einer DHCP-Antwortnachricht zu tragen; und
ein Sendemodul, das dafür konfiguriert ist, unter Verwendung der DHCP-Antwortnachricht die Konfigurationsinformation im XML-Format an den DHCP-Client zu senden.

7. Vorrichtung (40) nach Anspruch 5 oder 6, wobei:
die DHCP-Entdeckungsnachricht eine erste Verifizierungsinformation trägt oder die DHCP-Anforderungsnachricht die erste Verifizierungsinformation trägt oder sowohl die DHCP-Entdeckungsnachricht als auch die DHCP-Anforderungsnachricht die erste Verifizierungsinformation tragen;
die Sendeeinheit (42) spezifisch dafür konfiguriert ist:
wenn bestimmt wird, dass die erste Verifizierungsinformation in der DHCP-Entdeckungsnachricht gleich ist wie die zweite Verifizierungsinformation, die durch die Vorrichtung (40) gespeichert wird, die DHCP-Angebotsnachricht an den DHCP-Client zu senden; und
die Konfigurationsinformations-Erfassungseinheit spezifisch dafür konfiguriert ist:
wenn bestimmt wird, dass die erste Verifizierungsinformation in der DHCP-Anforderungsnachricht gleich ist wie die zweite Verifizierungsinformation, die durch die Vorrichtung (40) gespeichert wird, die Konfigurationsinformation zu erfassen, die der SSID entspricht und durch die Vorrichtung (40) konfiguriert wird.

8. Vorrichtung (40) nach einem der Ansprüche 5 bis 7, wobei die Konfigurationsinformations-Erfassungseinheit (43) ferner dafür konfiguriert ist:
zu überwachen, ob sich die Konfigurationsinformation, die durch die Vorrichtung gespeichert wird, verändert hat, und
wenn sich die Konfigurationsinformation, die durch die Vorrichtung (40) gespeichert wird, verändert hat, die veränderte Konfigurationsinformation neuerlich zu erfassen; und wobei die Sendeeinheit (42) ferner dafür konfiguriert ist, die veränderte Konfigurationsinformation an den DHCP-Client zu senden, um es dem DHCP-Client zu ermöglichen, die Konfiguration gemäß der veränderten Konfigurationsinformation neuerlich durchzuführen.

9. Verfahren zum automatischen Synchronisieren einer Drahtloszugangsnetzkonfiguration, umfassend:
Senden (S21), durch einen Dynamic Host Configuration Protocol-DHCP-Client, einer DHCP-Entdeckungsnachricht an einen DHCP-Server, wobei der DHCP-Server eine Drahtloszugangsvorrichtung ist, die mit einem Eingang eines externen Netzes verbunden ist, und wobei der DHCP-Client eine andere Drahtloszugangsvorrichtung ist, die mit dem DHCP-Server verbunden ist;
Empfangen (S22), durch den DHCP-Client, einer DHCP-Angebotsnachricht, die durch einen DHCP-Server gesendet wurde;
Senden (S23), durch den DHCP-Client, einer DHCP-Anforderungsnachricht, um es dem DHCP-Server, der die DHCP-Anforderungsnachricht empfängt, zu ermöglichen, eine Konfigurationsinformation zu erfassen, die einer SSID entspricht, wobei die Konfigurationsinformation und die SSID durch den DHCP-Server konfiguriert werden; und
Empfangen (S24), durch den DHCP-Client, der Konfigurationsinformation, die durch den DHCP-Server gesendet wurde und der SSID entspricht, und Durchführen der Konfiguration eines Drahtloszugangsnetzes gemäß der Konfigurationsinformation.

10. Verfahren nach Anspruch 9, wobei:
die DHCP-Entdeckungsnachricht eine erste Verifizierungsinformation trägt oder die DHCP-Anforderungsnachricht die erste Verifizierungsinformation trägt oder sowohl die DHCP-Entdeckungsnachricht als auch die DHCP-Anforderungsnachricht die erste Verifizierungsinformation tragen.

11. Vorrichtung (60) zum automatischen Synchronisieren einer Drahtloszugangsnetzkonfiguration, wobei die Vorrichtung eine Drahtloszugangsvorrichtung und ein DHCP-Client ist, der mit einem DHCP-Server verbunden ist, und wobei der DHCP-Server eine andere Drahtloszugangsvorrichtung ist, die mit einem Eingang eines externen Netzes verbunden ist, umfassend:
eine Sendeeinheit (61), die dafür konfiguriert ist, eine DHCP-Entdeckungsnachricht zu senden;
eine Empfangseinheit (62), die dafür konfiguriert ist, eine DHCP-Angebotsnachricht zu empfangen, die durch einen DHCP-Server gesendet wurde;
wobei die Sendeeinheit (61) ferner dafür konfiguriert ist, eine DHCP-Anforderungsnachricht zu senden, um es dem DHCP-Server, der die DHCP-Anforderungsnachricht empfängt, zu ermöglichen, die Konfigurationsinformation zu erfassen, die einer SSID entspricht, wobei die Konfigurationsinformation und die SSID durch den DHCP-Server konfiguriert werden; und
wobei die Empfangseinheit (62) ferner dafür konfiguriert ist, die Konfigurationsinformation zu empfangen, die durch den DHCP-Server gesendet wurde und der SSID entspricht; und
eine Konfigurationseinheit (63), die dafür konfiguriert ist, die Konfiguration eines Drahtloszugangsnetzes gemäß der Konfigurationsinformation durchzuführen, die durch den Empfangseinheit (62) empfangen wurde.

## Revendications

1. Procédé pour synchroniser automatiquement une configuration de réseau d'accès sans fil, consistant :
à recevoir (SI 1), au moyen d'un serveur de protocole de configuration d'hôte dynamique (DHCP), un message de découverte de protocole DHCP envoyé par un client de protocole DHCP, dans lequel le serveur de protocole DHCP est un dispositif d'accès sans fil connecté à une entrée d'un réseau externe et le client de protocole DHCP est un autre dispositif d'accès sans fil connecté au serveur de protocole DHCP ;
à envoyer (S12), au moyen du serveur de protocole DHCP, un message d'offre de protocole DHCP au client de protocole DHCP ; et
à recevoir (S13), au moyen du serveur de protocole DHCP, un message de demande de protocole DHCP envoyé par le client de protocole DHCP, à acquérir des informations de configuration qui correspondent à un identifiant SSID, dans lequel les informations de configuration et l'identifiant SSID sont configurés par le serveur de protocole DHCP, et à envoyer les informations de configuration correspondant à l'identifiant SSID au client de protocole DHCP de sorte à permettre au client de protocole DHCP d'effectuer une configuration d'un réseau d'accès sans fil en fonction des informations de configuration.

2. Procédé selon la revendication 1, dans lequel l'envoi des informations de configuration correspondant à l'identifiant SSID au client de protocole DHCP consiste :
à encapsuler, en utilisant un format de langage de balisage extensible (XML), les informations de configuration correspondant à l'identifiant SSID ;
à transporter les informations de configuration dans le format XML en utilisant une option réservée (OPTION) dans un message de réponse de protocole DHCP ; et
à envoyer, en utilisant le message de réponse de protocole DHCP, les informations de configuration dans le format XML au client de protocole DHCP.

3. Procédé selon la revendication 1 ou 2, dans lequel :
le message de découverte de protocole DHCP et/ou le message de demande de protocole DHCP comportent des premières informations de vérification ;
l'envoi, par le serveur de protocole DHCP, d'un message d'offre de protocole DHCP au client de protocole DHCP consiste :
lorsqu'il est déterminé que les premières informations de vérification dans le message de découverte de protocole DHCP sont les mêmes que des secondes informations de vérification stockées par le serveur de protocole DHCP, à envoyer, au moyen du serveur de protocole DHCP, le message d'offre de protocole DHCP au client de protocole DHCP ; et
l'acquisition des informations de configuration qui correspondent à l'identifiant SSID et
sont configurées par le serveur de protocole DHCP, consiste :
lorsqu'il est déterminé que les premières informations de vérification dans le message de demande de protocole DHCP sont les mêmes que des secondes informations de vérification stockées par le serveur de protocole DHCP, à acquérir les informations de configuration qui correspondent à l'identifiant SSID et sont configurées par le serveur de protocole DHCP.

4. Procédé selon l'une quelconque des revendications 1 à 3, dans lequel, après l'envoi les informations de configuration qui correspondent à l'identifiant SSID au client de protocole DHCP, le procédé consiste en outre :
à surveiller, au moyen du serveur de protocole DHCP, si les informations de configuration stockées par le serveur de protocole DHCP ont changé ; et
lorsque les informations de configuration stockées par le serveur de protocole DHCP ont changé, à acquérir les informations de configuration changées et à envoyer les informations de configuration changées au client de protocole DHCP de sorte à permettre au client de protocole DHCP d'effectuer à nouveau une configuration en fonction des informations de configuration changées.

5. Appareil (40) pour synchroniser automatiquement une configuration de réseau d'accès sans fil, comprenant :
une unité de réception (41), configurée pour recevoir un message de découverte de protocole DHCP envoyé par un client de protocole de configuration d'hôte dynamique (DHCP), dans lequel l'appareil (40) est utilisé comme serveur de protocole DHCP et est un dispositif d'accès sans fil connecté à une entrée d'un réseau externe et le client de protocole DHCP est un autre dispositif d'accès sans fil connecté au serveur de protocole DHCP;
une unité d'envoi (42), configurée pour envoyer un message d'offre de protocole DHCP au client de protocole DHCP ; dans lequel
l'unité de réception (41) est en outre configurée pour recevoir un message de demande de protocole DHCP envoyé par le client de protocole DHCP ; et
une unité d'acquisition d'informations de configuration (43), configurée pour acquérir des informations de configuration qui correspondent à un identifiant SSID, dans lequel les informations de configuration et l'identifiant SSID sont configurés par l'appareil (40) ; dans lequel
l'unité d'envoi (42) est en outre configurée pour envoyer les informations de configuration qui sont acquises par l'unité d'acquisition d'informations de configuration (43) et qui correspondent à l'identifiant SSID au client de protocole DHCP de sorte à permettre au client de protocole DHCP d'effectuer une configuration d'un réseau d'accès sans fil en fonction des informations de configuration.

6. Appareil (40) selon la revendication 5, dans lequel l'unité d'envoi comprend spécialement :
un module d'encapsulation XML, configuré pour encapsuler, en utilisant un format de langage de balisage extensible (XML), les informations de configuration qui sont acquises par l'unité d'acquisition d'informations de configuration et qui correspondent à l'identifiant SSID ;
un module de transport d'informations de configuration, configuré pour transporter les informations de configuration dans le format XML en utilisant une option réservée (OPTION) dans un message de réponse de protocole DHCP ; et
un module d'envoi, configuré pour envoyer, en utilisant le message de réponse de protocole DHCP, les informations de configuration dans le format XML au client de protocole DHCP.

7. Appareil (40) selon la revendication 5 ou 6, dans lequel :
le message de découverte de protocole DHCP comporte des premières informations de vérification ou le message de demande de protocole DHCP comporte des premières informations de vérification ou à la fois le message de découverte de protocole DHCP et le message de demande de protocole DHCP comportent des premières informations de vérification ;
l'unité d'envoi (42) est spécialement configurée :
lorsqu'il est déterminé que les premières informations de vérification dans le message de découverte de protocole DHCP sont les mêmes que des secondes informations de vérification stockées par l'appareil (40), pour envoyer le message d'offre de protocole DHCP au client de protocole DHCP ; et
l'unité d'acquisition d'informations de configuration est spécialement configurée :
lorsqu'il est déterminé que les premières informations de vérification dans le message de demande de protocole DHCP sont les mêmes que les secondes informations de vérification stockées par l'appareil (40), pour acquérir les informations de configuration qui correspondent à l'identifiant SSID et sont configurées par l'appareil (40).

8. Appareil (40) selon l'une quelconque des revendications 5 à 7, dans lequel l'unité d'acquisition d'informations de configuration (43) est en outre configurée :
pour surveiller si les informations de configuration stockées par l'appareil ont changé, et lorsque les informations de configuration stockées par l'appareil (40) ont changé, pour acquérir à nouveau les informations de configuration changées ; et
l'unité d'envoi (42) est en outre configurée pour envoyer les informations de configuration changées au client de protocole DHCP de sorte à permettre au client de protocole DHCP d'effectuer à nouveau une configuration en fonction des informations de configuration changées.

9. Procédé pour synchroniser automatiquement une configuration de réseau d'accès sans fil, consistant :
à envoyer (S21), au moyen d'un client de protocole de configuration d'hôte dynamique (DHCP), un message de découverte de protocole DHCP à un serveur de protocole DHCP, dans lequel le serveur de protocole DHCP est un dispositif d'accès sans fil connecté à une entrée d'un réseau externe et le client de protocole DHCP est un autre dispositif d'accès sans fil connecté au serveur de protocole DHCP ;
à recevoir (S22), au moyen du client de protocole DHCP, un message d'offre de protocole DHCP envoyé par un serveur de protocole DHCP ;
à envoyer (S23), au moyen du client de protocole DHCP, un message de demande de protocole DHCP de sorte à permettre au serveur de protocole DHCP qui reçoit le message de demande de protocole DHCP, d'acquérir des informations de configuration qui correspondent à un identifiant SSID, dans lequel les informations de configuration et l'identifiant SSID sont configurés par le serveur de protocole DHCP ; et
à recevoir (S24), au moyen du client de protocole DHCP, les informations de configuration qui sont envoyées par le serveur de protocole DHCP et qui correspondent à l'identifiant SSID, et à effectuer une configuration d'un réseau d'accès sans fil en fonction des informations de configuration.

10. Procédé selon la revendication 9, dans lequel :
le message de découverte de protocole DHCP comporte des premières informations de vérification ou le message de demande de protocole DHCP comporte des premières informations de vérification ou à la fois le message de découverte de protocole DHCP et le message de demande de protocole DHCP comportent des premières informations de vérification.

11. Appareil (60) pour synchroniser automatiquement une configuration de réseau d'accès sans fil, dans lequel l'appareil est un dispositif d'accès sans fil et un client de protocole DHCP est connecté à un serveur de protocole DHCP et le serveur de protocole DHCP est un autre dispositif d'accès sans fil connecté à une entrée d'un réseau externe, comprenant
une unité d'envoi (61), configurée pour envoyer un message de découverte de protocole DHCP;
une unité de réception (62), configurée pour recevoir un message d'offre de protocole DHCP envoyé par un serveur de protocole DHCP ; dans lequel
l'unité d'envoi (61) est en outre configurée pour envoyer un message de demande de protocole DHCP de sorte à permettre au serveur de protocole DHCP qui reçoit le message de demande de protocole DHCP, d'acquérir des informations de configuration qui correspondent à un identifiant SSID, dans lequel les informations de configuration et l'identifiant SSID sont configurés par le serveur de protocole DHCP ; et
l'unité de réception (62) est en outre configurée pour recevoir les informations de configuration qui sont envoyées par le serveur de protocole DHCP et qui correspondent à l'identifiant SSID ; et
une unité de configuration (63), configurée pour effectuer une configuration d'un réseau d'accès sans fil en fonction des informations de configuration reçues par l'unité de réception (62).
